# FASCICULE DE BREVET EUROPEEN

(11) **EP 1 957 361 B1**
(45) Date de publication et mention de la délivrance du brevet: **29.09.2010**
(21) Numéro de dépôt: 06842033.0
(22) Date de dépôt: 23.11.2006
(51) Int. Cl.: B64C 7/00

(54) **MUR DE CLOISONNEMENT POUR CARÉNAGE VENTRAL D'AÉRONEF ET AÉRONEF MUNI D'UN CARÉNAGE VENTRAL**
FLUGZEUG-UNTERVERKLEIDUNGS-TRENNWAND UND FLUGZEUG MIT EINER UNTERVERKLEIDUNG
AIRCRAFT VENTRAL FAIRING PARTITION WALL AND AIRCRAFT EQUIPPED WITH A VENTRAL FAIRING

(30) Priorité: 07.12.2005 FR 0553760
(43) Date de publication de la demande: 20.08.2008
(73) Titulaire: AIRBUS OPERATIONS (S.A.S), 31060 Toulouse (FR)
(72) Inventeur: ROUYRE, François, F-31700 Cornebarrieu (FR)
(74) Mandataire: Lebrette, Camille
(86) Numéro de dépôt international: PCT/FR2006/051222
(87) Numéro de publication internationale: WO 2007/066026

(56) Documents cités:
- EP-A- 1 342 927
- US-A1- 2002 178 583

## Description

L'invention concerne un mur de cloisonnement pour compartimenter verticalement le volume interne d'un carénage ventral, ou ventre mou d'un aéronef. Plus précisément, l'invention concerne des dispositifs de fixation du mur de cloisonnement permettant de relier ledit mur de cloisonnement au carénage ventral et à l'aéronef. L'invention concerne également un aéronef muni d'un carénage ventral dont le volume interne est compartimenté par au moins un mur de cloisonnement vertical de l'invention.

Dans le domaine de l'aéronautique, il est connu de munir les aéronefs d'un carénage ventral, cf EP 1 342 927. Généralement, le carénage ventral, en forme de berceau, est muni d'une base et de deux panneaux longitudinaux remontant latéralement de part et d'autre du fuselage de l'aéronef sur lequel il est monté. Chaque panneau est muni d'un évidement apte à laisser passer une aile de la voilure de l'aéronef. Le carénage ventral est fixé à la partie inférieure du fuselage, au croisement dudit fuselage avec la voilure de l'aéronef, pour obturer la case de train d'atterrissage en augmentant éventuellement le volume vers le bas. Un tel carénage ventral complète le profil aérodynamique de la zone de croisement entre le fuselage et la case de train d'atterrissage et sa forme particulière permet de minimiser la traînée aérodynamique qu'il engendre.

Le carénage ventral est généralement cloisonné, au moyen de murs verticaux, de manière à ménager plusieurs compartiments dans le volume interne du carénage ventral. Ce cloisonnement a trois fonctions principales.

Tout d'abord, cette compartimentation du volume interne du carénage ventral en plusieurs sous volumes permet, en cas de perte d'un panneau de la peau externe du carénage ventral, d'éviter la surcharge par effet de différence de pressions des autres panneaux de la peau externe, ce qui pourrait sinon entraîner la perte d'autres panneaux de la peau externe. En effet, du fait de la perte d'un ou plusieurs panneaux de la peau externe du carénage ventral, l'air peut s'engouffrer dans le volume interne du carénage. En l'absence du cloisonnement du volume interne du carénage par des murs de cloisonnement, il y a un risque de surpression à l'intérieur du volume interne général du carénage.

Une deuxième fonction de cette compartimentation du volume interne du carénage ventral est de permettre la ségrégation des volumes dudit carénage en cas de fumées ou de vapeur de carburant, afin que celles-ci ne se propagent pas dans l'ensemble du volume interne du carénage ventral.

Enfin, la compartimentation du volume interne du carénage ventral par des murs de cloisonnement assure la tenue mécanique de la forme aérodynamique du carénage ventral.

Lorsque l'aéronef est en vol, les panneaux formant les murs de cloisonnement du carénage ventral doivent pouvoir supporter des déplacements dus à la souplesse de l'aéronef. On connaît notamment l'effet fuselage, qui entraîne une flexion de l'aéronef suivant l'axe transverse Y et donc des compressions des panneaux des murs de cloisonnement qui sont orientés selon l'axe longitudinal X de l'aéronef.

Par ailleurs, en vol, la flexion de la voilure entraîne un allongement au niveau des panneaux les plus externes de l'intrados de la voilure. A l'inverse, le carénage ventral, rattaché à l'intrados de la voilure, ne doit subir aucune déformation, afin de garder sa forme aérodynamique.

Les murs de cloisonnement de l'état de la technique sont une succession de panneaux fixes et flottants, disposés parallèlement et perpendiculairement à l'axe X de l'aéronef, et reliés les uns aux autres par des joints d'étanchéité.

Cependant, dans le cas d'un aéronef de grande envergure, dont le fuselage peut atteindre plus de 80 mètres de longueur, la flexion de la voilure, vers le haut ou vers le bas, provoque un allongement de l'intrados de la voilure pouvant atteindre 10 à 15 mm. Cet allongement est principalement situé au niveau du caisson de voilure, disposé au dessus du carénage ventral, à la jonction entre la voilure et le fuselage de l'aéronef. De plus, du fait de la longueur importante du fuselage, les risques de compression au niveau de carénage ventral sont tels qu'ils rendent difficile l'utilisation de murs de cloisonnement longitudinaux verticaux, c'est-à-dire s'étendant verticalement et parallèlement à l'axe longitudinal X de l'aéronef.

Les murs de cloisonnement d'un carénage ventral d'un aéronef de grande envergure, situés sous la zone d'allongement du caisson de voilure, doivent pouvoir accepter les différentiels de mouvements entre le carénage ventral, qui est et doit rester fixe sur l'aéronef; et l'intrados de la voilure, qui peut subir un allongement de 10 à 15 mm lorsque l'aéronef est en vol. Les murs de cloisonnement doivent également être aptes à reprendre les différences de pressions entre les compartiments.

Dans l'invention, on cherche à fournir un carénage ventral pouvant être utilisé sur un aéronef ayant un fuselage de longueur importante, c'est-à-dire supérieure à 50 mètres, par exemple d'environ 80 mètres. Un autre but de l'invention est de fournir un mur de cloisonnement pour carénage ventral apte à autoriser un allongement transversal du caisson de voilure auquel il est fixé. Par allongement transversal, on entend un allongement s'étendant perpendiculairement à l'axe longitudinal X de l'aéronef et dans un plan parallèle au plan contenant ledit aéronef, c'est-à-dire un allongement selon l'axe transverse Y.

Pour cela, l'invention propose d'utiliser une cloison de compartimentation apte à cloisonner et à assurer la tenue mécanique du carénage ventral de l'aéronef, tout en autorisant le déplacement de la structure inférieure du fuselage à laquelle ladite cloison est fixée. La cloison de compartimentation selon l'invention est destinée à cloisonner transversalement le volume interne de carénage ventral, c'est-à-dire à réaliser des compartiments s'étendant perpendiculairement à l'axe longitudinal X de l'aéronef. Ainsi, la cloison de compartimentation selon l'invention s'étend dans le sens de l'allongement potentiel de la structure inférieure du fuselage à laquelle elle est reliée. La cloison de compartimentation est rigide et fixe sur le carénage ventral, pour tenir la structure du carénage ventral. A l'inverse, la liaison entre la cloison de compartimentation et la structure inférieure du fuselage est souple pour autoriser l'allongement de ladite structure inférieure. La cloison de compartimentation selon l'invention est formée d'une pluralité de panneaux s'étendant verticalement depuis le plancher, ou la semelle, du carénage ventral jusqu'à la surface inférieure du fuselage. Les panneaux formant la cloison s'étendent dans le prolongement les uns des autres de manière à diviser le carénage ventral dans sa largeur. Par largeur du carénage ventral, on entend la dimension dudit carénage s'étendant selon l'axe transverse Y de l'aéronef.

Dans la mesure où l'allongement de la structure inférieure du fuselage se fait principalement dans la zone située au niveau des rebords longitudinaux externes du carénage ventral, la cloison de compartimentation selon l'invention prévoit des panneaux externes, situés au niveau desdits rebords longitudinaux, dont la liaison à la structure inférieure du fuselage est pivotante transversalement. Par pivotante transversalement, on entend que la liaison peut basculer perpendiculairement à l'axe longitudinal X, à droite et à gauche dudit axe X. Les panneaux extérieurs de la cloison de compartimentation, qui sont montés fixement sur la semelle du carénage ne peuvent pas bouger par rapport à ladite semelle. Par contre, la structure inférieure du fuselage, à laquelle les panneaux extérieurs de la cloison de compartimentation sont reliés, peut bouger transversalement, et notamment s'allonger selon l'axe transverse Y, entraînant, lors de ce déplacement, la liaison pivotante transversalement à droite ou à gauche par rapport à sa position initiale.

Les autres panneaux de la cloison de compartimentation n'ont pas besoin d'avoir une liaison avec la structure inférieure du fuselage qui permette un tel débattement, puisque l'allongement de la structure inférieure du fuselage est principalement situé au niveau des panneaux extérieurs. Par exemple, il suffit aux liaisons des panneaux intérieurs, situés entre les panneaux extérieurs et le panneau central de la cloison de compartimentation, de permettre un léger débattement selon l'axe transverse Y. Le panneau central, lui, peut avoir une liaison parfaitement fixe par rapport à la structure inférieure du fuselage puisqu'il est situé au niveau de la partie de la structure inférieure du fuselage qui n'est soumise à aucun allongement puisque située dans l'axe X de l'aéronef.

L'invention a donc pour objet un mur de cloisonnement vertical pour carénage ventral d'aéronef comportant une pluralité de panneaux verticaux, chaque panneau étant relié à un panneau adjacent par un piquet vertical, **caractérisé en ce qu'**au moins un panneau extérieur, situé à une extrémité du mur de cloisonnement, est monté fixe sur au moins un piquet vertical associé, l'extrémité haute dudit piquet vertical associé étant munie d'un moyen de fixation en rotation transversale destiné à être fixé à la structure d'un aéronef, le moyen de fixation en rotation transversale étant apte à autoriser le déplacement de la structure de l'aéronef par rapport au mur de cloisonnement fixe.

Par rotation transversale, on entend une rotation selon un axe s'étendant parallèlement à l'axe longitudinal X de l'aéronef, perpendiculairement au mur de cloisonnement.

Selon des exemples de réalisation de l'invention, il est possible de prévoir tout ou parties des caractéristiques supplémentaires suivantes :
- Au moins un piquet vertical associé à un panneau extérieur comporte un moyen de fixation en translation destiné à être relié à la structure de l'aéronef, de manière à reprendre les efforts axiaux auxquels le panneau extérieur est soumis.
   Par fixation en translation, on entend que le moyen de fixation peut avoir un mouvement rectiligne, parallèle à l'axe longitudinal X.
- Au moins un panneau intermédiaire, disposé entre un panneau extérieur et un panneau central, est monté flottant sur au moins un piquet vertical associé, de manière à avoir un débattement parallèlement et perpendiculairement aux panneaux adjacents.
   Par flottant, on entend que le panneau intermédiaire n'est pas relié de manière fixe et figée au piquet vertical associé, mais au contraire, bien que maintenu en position par ledit piquet vertical associé, le panneau intermédiaire peut osciller d'avant et arrière et de droite à gauche, dans des limites qui dépendent du piquet vertical associé lui-même.
- L'extrémité haute et l'extrémité basse d'au moins un piquet vertical associé à un panneau intermédiaire sont munies de moyens de fixation en rotation axiale, destinés à être fixés respectivement à la structure de l'aéronef et au carénage ventral.
   Par rotation axiale, on entend une rotation selon un axe s'étendant parallèlement à l'axe transverse Y de l'aéronef, et permettant un basculement d'avant en arrière par rapport à l'axe longitudinal X.
- Le mur de cloisonnement comporte un panneau central monté fixe sur deux piquets verticaux associés qui l'encadrent.

L'invention concerne également un aéronef muni d'un carénage ventral comportant au moins un mur de cloisonnement selon l'invention et situé au dessous du caisson de voilure de l'aéronef, à la jonction entre la voilure et le fuselage de l'aéronef, dans lequel les panneaux verticaux du mur de cloisonnement sont montés fixes sur la semelle du carénage ventral.

Selon des exemples de réalisation de l'aéronef, il est possible de prévoir tout ou parties des caractéristiques supplémentaires suivantes :
- L'extrémité haute d'au moins un piquet vertical associé à un panneau extérieur du mur de cloisonnement est montée en rotation transversale sur le caisson de voilure de l'aéronef, de manière à autoriser l'allongement dudit caisson de voilure perpendiculairement à l'axe longitudinal de l'aéronef.
- Au moins un piquet vertical associé à un panneau extérieur du mur de cloisonnement vertical est relié en translation au caisson de voilure, de manière à reprendre les efforts axiaux auxquels ledit panneau extérieur est soumis.
- L'extrémité haute et l'extrémité basse d'au moins un piquet vertical associé à un panneau intermédiaire du mur de cloisonnement vertical sont montées en rotation axiale, respectivement sur le caisson de voilure et sur la semelle du carénage ventral, de manière à reprendre les efforts axiaux auxquels ledit panneau intermédiaire est soumis.
- Le mur de cloisonnement est relié au caisson de voilure par des poutres longitudinales s'étendant parallèlement à l'axe longitudinal de l'aéronef. Plus précisément, des ferrures disposées sous les poutres assurent la liaison entre les panneaux du mur de cloisonnement et les poutres de l'intrados du caisson de voilure.
- Le carénage ventral est muni de deux murs de cloisonnement verticaux selon l'invention, lesdits murs de cloisonnement s'étendant de part et d'autre du caisson de voilure de l'aéronef, perpendiculairement à l'axe longitudinal de l'aéronef et parallèlement à l'axe transverse dudit aéronef.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Un aéronef muni d'un carénage ventral ;
- Figure 2 : Une coupe transversale d'un carénage ventral au niveau d'un mur de cloisonnement selon l'invention ;
- Figure 3 : Un agrandissement partiel du mur de cloisonnement de la figure 2 ;
- Figure 4 : Une représentation schématique d'un panneau extérieur du mur de cloisonnement selon l'invention ;
- Figure 5 : Une représentation d'un piquet vertical reliant un panneau extérieur du mur de cloisonnement, au carénage ventral d'une part et au caisson de voilure de l'aéronef d'autre part ;
- Figure 6 : Une représentation schématique en coupe de la liaison entre le piquet vertical associé à un panneau extérieur et une poutre du caisson de voilure ;
- Figure 7 : Une représentation schématique d'un piquet vertical bifonctionnel, associé à un panneau intermédiaire et à un panneau central du mur de cloisonnement ;
- Figure 8 : Une représentation schématique d'un piquet vertical associé à deux panneaux intermédiaires du mur de cloisonnement ;
- Figure 9 : Un agrandissement de la liaison entre un piquet vertical associé à des panneaux intermédiaires et une poutre du caisson de voilure.

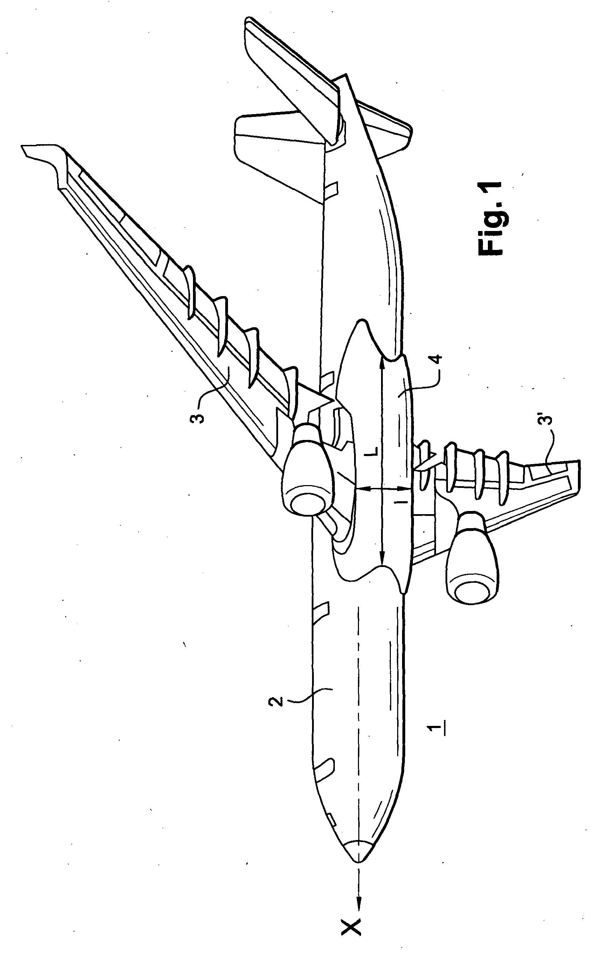

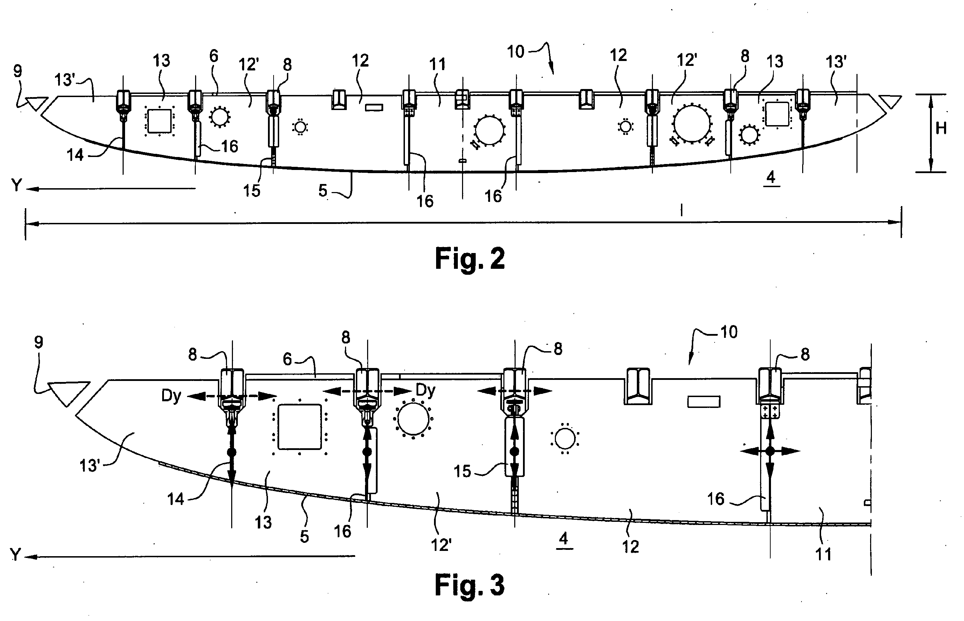

Sur la figure 1 est représenté un aéronef 1 comportant un fuselage 2 et une voilure 3, 3'. Un carénage ventral 4 est fixé en partie basse du fuselage 2, au niveau de la jonction entre le fuselage 2 et la voilure 3, 3'. Le carénage ventral 4 s'étend dans la longueur du fuselage 2. Par longueur du fuselage, on entend la dimension du fuselage s'étendant parallèlement à l'axe longitudinal X de l'aéronef 1. La longueur L du carénage ventral 4 est la dimension dudit carénage 4 s'étendant parallèlement à l'axe X. La largeur 1 du carénage ventral 4 est la dimension dudit carénage 4 s'étendant entre les deux ailes 3, 3' de la voilure, perpendiculairement à la longueur L dudit carénage 4. La largeur I du carénage 4 s'étend parallèlement à l'axe transversal Y (figure 2).

Le carénage ventral 4 a une longueur L et une largeur I fixes, c'est-à-dire qui ne tendent pas à se modifier au cours de l'utilisation de l'aéronef 1.

A l'inverse, le caisson de voilure de l'aéronef 1 (non visible sur la figure 1), situé dans le volume interne du carénage ventral 4, entre les deux ailes 3, 3', peut s'allonger dans des directions perpendiculaires à l'axe longitudinal X et parallèlement à l'axe transversal Y, du fait de la flexion de la voilure 3, 3'.

Aussi, la zone de liaison entre le carénage ventral 4 et le caisson de voilure doit autoriser ce différentiel de mouvements. La liaison entre le carénage ventral 4 et le caisson de voilure est réalisée par un ou plusieurs murs de cloisonnement (non visibles sur la figure 1) qui compartimentent verticalement le volume interne du carénage ventral 4. La liaison entre ce ou ces murs de cloisonnement et le caisson de voilure doit être souple pour autoriser l'allongement dudit caisson de voilure.

Sur la figure 2 est représentée une coupe transversale, selon l'axe transverse Y, du carénage 4 de l'aéronef 1. La coupe transversale est située au niveau d'un mur de cloisonnement 10 de l'invention, situé sous le caisson de voilure de l'aéronef 1. Sur la figure 3 est représenté un agrandissement de la partie gauche du mur de cloisonnement 10, tel que représenté sur la figure 2.

Comme cela est visible sur la figure 2, le mur de cloisonnement 10 comporte neuf panneaux verticaux 11, 12, 12', 13, 13'. Plus précisément, le mur de cloisonnement 10 comporte un panneau central 11 bordé à droite et à gauche par deux panneaux intermédiaires 12 et 12' et deux panneaux extérieurs 13 et 13'. Ainsi, les panneaux 11, 12, 12', 13, 13' du mur de cloisonnement sont disposés symétriquement par rapport à l'axe longitudinal X de l'aéronef 1. Les panneaux 11, 12, 12', 13, 13' sont des panneaux verticaux s'étendant dans la hauteur H du carénage ventral 4, depuis la semelle 5 du carénage ventral 4, jusqu'à l'intrados 6 du caisson de voilure situé au-dessus du carénage ventral 4.

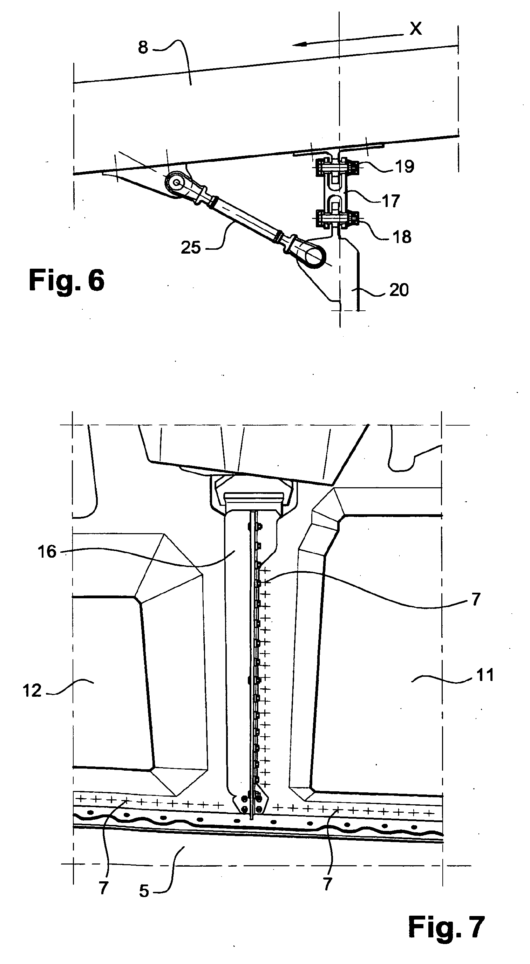

Le panneau central 11 du mur de cloisonnement 10 est monté fixe, par l'intermédiaire de fixations 7 (figure 7) sur la semelle 5 du carénage 4 et sur les deux piquets verticaux 16 bifonctionnels associés qui l'encadrent. De même, la liaison entre le panneau central 11 et une poutre 8 du caisson de voilure située au-dessus dudit panneau centrale 11 est fixe. Ainsi, le panneau central 11 est immobile par rapport au carénage ventral 4 et par rapport au caisson de voilure de l'aéronef. Le panneau central 11 reprend les efforts selon les axes longitudinal X, transverse Y et vertical Z. Par axe vertical Z, on entend l'axe s'étendant verticalement, suivant la hauteur H du carénage ventral 4.

Le panneau central 11 est bordé sur chacun de ses deux rebords verticaux par un premier panneau intermédiaire 12. Chaque piquet vertical 16 associé au panneau central 11 est également associé à un premier panneau intermédiaire 12. Chacun des premiers panneaux intermédiaires 12 est bordé par le panneau central 11 d'un côté et par le second panneau intermédiaire 12' de l'autre côté. Un piquet vertical 15 est disposé entre le premier 12 et le second 12' panneau intermédiaire. Le piquet vertical 15 associé aux deux panneaux intermédiaires 12, 12' maintient lesdits panneaux solidairement au reste du mur de cloisonnement 10. Par ailleurs, le rebord inférieur de chacun des panneaux intermédiaires 12, 12' est fixé sur la semelle 5 du carénage ventral 4 par des fixations 7 (figure 7).

Le second panneau intermédiaire 12' est bordé sur un de ses deux rebords verticaux par un premier panneau extérieur 13, les deux panneaux 12', 13 étant maintenus ensembles et avec le reste du mur de cloisonnement 10 par un piquet vertical 16 bifonctionnel.

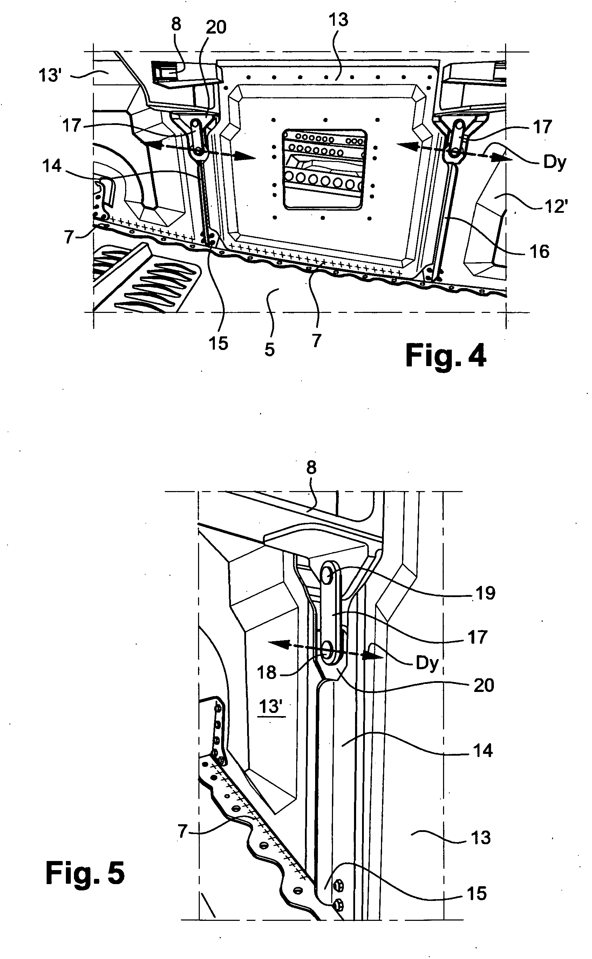

Le premier panneau extérieur 13 est bordé, à l'endroit de son deuxième rebord vertical, par un second panneau extérieur 13' auquel il est relié par un piquet vertical 14 spécifique. Le second rebord vertical du second panneau extérieur 13' est libre, c'est-à-dire qu'il n'est relié à aucun piquet vertical ni aucun panneau. Par ailleurs, chacun des panneaux extérieurs 13, 13' est fixé, au moyen de fixations 7 (figure 4), sur la semelle 5 du carénage ventral 4 par leur rebord inférieur.

Le mur de cloisonnement 10 s'étend dans toute la largeur I du carénage ventral 4. Les dimensions du mur de cloisonnement 10 sont fixes, en ce sens qu'elles ne sont pas modifiées au cours de l'utilisation de l'aéronef 1.

Les piquets verticaux 14, 15, 16 associés aux différents panneaux 11, 12, 12', 13, 13' du mur de cloisonnement 10 assurent, en plus de la liaison entre lesdits panneaux 11, 12, 12', 13, 13', la liaison entre le mur de cloisonnement 10 et l'intrados 6 du caisson de voilure de l'aéronef 1. Dans la mesure où le mur de cloisonnement 10 est solidaire du carénage ventral 4, ledit mur de cloisonnement 10 assure donc la liaison entre le carénage ventral 4 et l'aéronef 1. Les piquets verticaux 14, 15, 16 doivent assurer la rigidité du mur de cloisonnement 10 pour maintenir la structure mécanique du carénage ventral 4 mais également permettre l'allongement transversal selon l'axe Y de l'intrados 6 du caisson de voilure.

Comme cela est représenté sur la figure 4, les panneaux extérieurs 13 et 13' sont fixé sur la semelle 5 du carénage ventral 4 par des fixations 7. Le premier panneau extérieur 13 est encadré par deux piquets verticaux associés 14, 16. Le premier panneau extérieur 13 est monté fixe sur les piquets verticaux associés 14, 16 sur toute la hauteur desdits piquets verticaux associés 14, 16.

L'extrémité basse 15 des piquets verticaux 14, 16 associés au premier panneau extérieur 13 est montée fixe sur la semelle 5 du carénage ventral 4.

L'extrémité haute 20 des piquets verticaux 14, 16 associés au premier panneau extérieur 13 est reliée à une transversale poutre 8 appartenant à l'intrados du caisson de voilure de l'aéronef 1. La poutre transversale 8 s'étend parallèlement à l'axe longitudinal X est perpendiculairement au mur de cloisonnement 10. La liaison entre l'extrémité haute 20 du piquet vertical 14, 16 associé au premier panneau extérieur 13 du mur de cloisonnement 10 est assurée par une manille 17. La manille 17, telle que représentée à la figure 5, a une forme générale en H fournissant deux points de liaison 18, 19. Un premier point de liaison 18 est situé au niveau du piquet vertical 14 et un deuxième point de liaison 19 est situé au niveau de la poutre 8. La double liaison 18, 19 de la manille 17 est une liaison en rotation transversale qui permet un basculement de la manille 17 à droite et à gauche de l'axe longitudinal X.

Ainsi la manille 17 autorise un déplacement Dy de la poutre transversale 8, parallèlement à l'axe transversal Y, tandis que le piquet vertical 14, 16 ainsi que les panneaux extérieurs 13, 13' auxquels il est associé, restent fixes par rapport à la semelle 5 du carénage ventral 4. L'intrados du caisson de voilure associé à la poutre 8 peut donc s'allonger parallèlement à l'axe transversal Y sans que le mur de cloisonnement 10 ne se brise. On autorise ainsi, au niveau de la zone de l'intrados du caisson de voilure la plus soumise à l'allongement, que la poutre longitudinale 8 puisse se déplacer de manière à autoriser et suivre ledit allongement. Les panneaux extérieurs 13, 13' restant fixes, c'est-à-dire ne subissant aucun allongement, la tenue structurelle du mur de cloisonnement 10 est maintenue.

Le deuxième panneau extérieur 13' du mur de cloisonnement 10 n'est bordé verticalement que par le premier mur de cloisonnement extérieur 13, son deuxième rebord vertical étant libre. Plus précisément, le deuxième rebord vertical du deuxième panneau extérieur 13' s'étend le long de la peau externe du caisson de voilure. Il est possible de prévoir de munir le deuxième rebord vertical du deuxième panneau extérieur 13' d'un joint d'étanchéité 9 afin de maintenir l'étanchéité du volume interne du carénage ventral 4 lors de l'allongement du caisson de voilure.

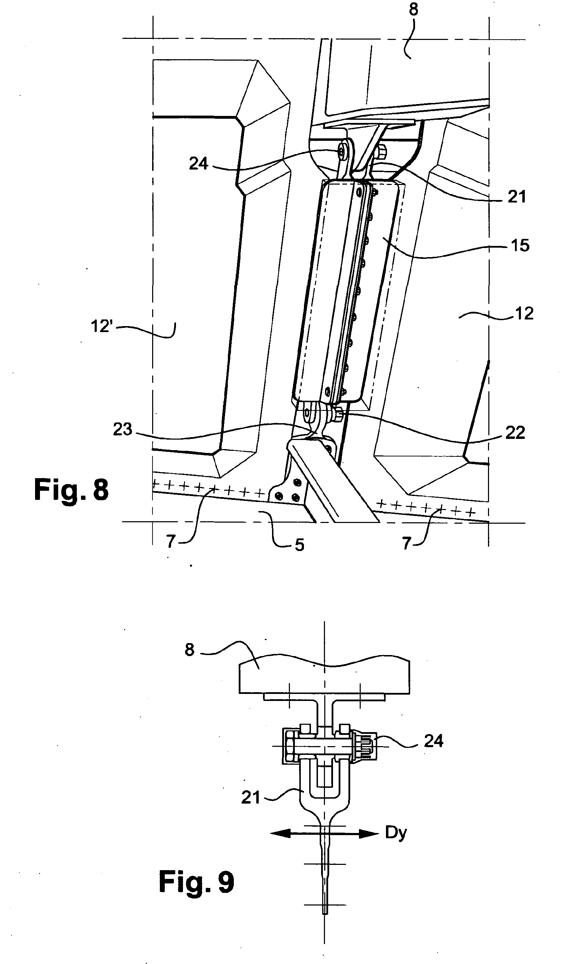

Comme cela est représenté sur les figures 7 et 8, les panneaux intermédiaires 12 et 12' du mur de cloisonnement 10 sont, eux, montés flottants sur les piquets verticaux associés 15, 16. Pour cela, les piquets verticaux 15, 16 associés aux panneaux intermédiaires 12 et 12' présentent, au niveau de leur liaison avec lesdits panneaux, un profil en forme de U entre les branches duquel les rebords verticaux des panneaux intermédiaires 12, 12' sont glissés. Plus précisément, la base du profil en U s'étend dans la hauteur du piquet vertical 15, 16, les branches du profil en U s'étendant perpendiculairement, en direction de panneaux intermédiaires qu'elles encadrent. La liaison entre les piquets verticaux 15, 16 et les panneaux intermédiaires 12, 12' auxquels ils sont associés autorisent donc un débattement, d'avant en arrière par rapport au sens d'avancement de l'aéronef 1, entre les deux branches du profil en U, et de gauche à droite.

Deux sortes de piquets verticaux 15, 16 sont associés aux panneaux intermédiaires 12, 12'. En effet, sur les trois piquets verticaux nécessaires au maintient de deux panneaux intermédiaires 12, 12' adjacents, un seul est relié aux deux panneaux intermédiaires 12, 12'. Les autres piquets verticaux associés 16 sont bifonctionnels, en ce sens qu'ils sont reliés à deux panneaux 12, 12', 11, 13 de natures différentes. Aussi, les piquets verticaux bifonctionnels 16 présentent un profil en U le long d'un seul rebord vertical, dirigé vers le panneau intermédiaire 12, 12', le deuxième rebord vertical desdits piquets bifonctionnels 16 étant plein (figure 7). Les piquets verticaux 15 associés à deux panneaux intermédiaires 12, 12', comme cela est représenté sur la figure 8, présentent un profil en U le long de leurs deux rebords verticaux, de manière à pouvoir être encadrés à droite et à gauche d'un panneau intermédiaire 12, 12'.

Les panneaux intermédiaires 12, 12' du mur de cloisonnement 10 sont montés fixes sur la semelle 5 du carénage ventral 4, au moyen de fixations 7.

Les efforts en X auxquels les panneaux intermédiaires 12 et 12' peuvent être soumis sont contenus et donc repris par les piquets verticaux 15, 16 associés, et plus précisément par les branches des profils en U desdits piquets verticaux 15, 16.

Comme cela est représenté sur la figure 8, une extrémité basse 23 du piquet vertical 15 associé à un panneau intermédiaire 12, 12' est reliée à la semelle 5 du carénage ventral 4 par une liaison rotulée inférieure 22. De même, une extrémité haute 21 du piquet vertical 15 associé à un panneau intermédiaire 12, 12' est reliée à une poutre 8 de l'intrados du caisson de voilure s'étendant parallèlement à l'axe longitudinal X de l'aéronef 1 par une liaison rotulée supérieure 24. Par exemple, les liaisons rotulées 22, 24 comportent un axe de rotation s'étendant parallèlement à l'axe transversal Y de l'aéronef 1 et permettant un basculement, parallèlement à l'axe longitudinal X de l'aéronef 1. Ainsi les efforts en X auxquels sont soumis les panneaux intermédiaires 12, 12' du mur de cloisonnement 10 sont également repris par les piquets verticaux associés 15 grâce aux liaisons rotulées 22, 24 du piquet vertical 15.

Dans le cas des panneaux extérieurs 13 et 13' du mur de cloisonnement, et comme cela est représenté sur la figure 6, les efforts en X peuvent être repris grâce à une bielle 25, reliant le piquet vertical 14 associé aux panneaux extérieur 13, 13' à la poutre 8 de l'intrados du caisson de voilure passant entre les deux panneaux extérieurs 13, 13'.

Ainsi, si les déplacements Dy d'une poutre 8 par rapport aux panneaux extérieurs 13, 13' sont rendus possibles grâce à la manille 17, les efforts en X des panneaux extérieurs 13, 13' sont repris par la bielle 24 qui encaisse lesdits efforts. Il y a donc triangulation de la liaison entre le piquet vertical 14 associé aux panneaux extérieurs 13, 13' et la poutre 8 associée à l'intrados 6 du caisson de voilure de l'aéronef 1.

Le mur de cloisonnement 10 peut par ailleurs être soumis à des efforts de compression s'étendant verticalement, c'est-à-dire dans la hauteur H du carénage 4. Les piquets verticaux 14, 15, 16 associés aux panneaux 11, 12, 12', 13, 13' du mur de cloisonnement 10 sont aptes à reprendre de tells efforts de compression.

Le mur de cloisonnement 10 selon l'invention autorise l'allongement en Y de l'intrados 6 du caisson de voilure situé sous ledit mur de cloisonnement 10, tout en reprenant les efforts de compression et les efforts en X auxquels ledit mur de cloisonnement 10 peut être soumis. Ainsi le mur de cloisonnement 10 remplit les fonctions de compartimentation des volumes et de tenue mécanique de la forme aérodynamique du carénage ventral 4 tout en répondant aux besoins spécifiques découlant de la longueur importante du fuselage 2 de l'aéronef 1.

Avantageusement, le carénage 4 selon l'invention est muni de deux murs de cloisonnement 10 selon l'invention, disposés de part et d'autre du caisson de voilure de l'aéronef 1, aucun autre mur de cloisonnement n'étant disposé entre ces deux murs de cloisonnement 10. Ainsi, aux deux extrémités du caisson de voilure, la liaison entre le carénage 4 et le fuselage 2 de l'aéronef est compatible avec l'allongement dudit caisson de voilure. Il est par ailleurs possible de prévoir un troisième mur de cloisonnement, en amont ou en aval du caisson de voilure, qui lui ne nécessite pas de liaison particulière, puisque aucun allongement n'a lieu en amont et en aval du caisson de voilure.

## Revendications

1. Mur (10) de cloisonnement vertical pour carénage ventral (4) d'aéronef (1) comportant une pluralité de panneaux (11, 12, 12', 13, 13') verticaux s'étendant dans le prolongement les uns des autres, chaque panneau étant relié à un panneau adjacent par un piquet vertical (14, 15, 16), **caractérisé en ce qu'**au moins un panneau extérieur (13, 13') du mur de cloisonnement, situé à une extrémité dudit mur de cloisonnement, est monté fixe sur au moins un piquet vertical (14, 16) associé, l'extrémité haute (20) dudit piquet vertical associé étant munie d'un moyen de fixation en rotation transversale (17, 18, 19) destiné à être fixé à la structure (8) d'un aéronef, le moyen de fixation en rotation transversale étant apte à autoriser le déplacement (Dy) de la structure de l'aéronef par rapport au mur de cloisonnement, dans le prolongement dudit mur de cloisonnement.

2. Mur de cloisonnement vertical selon la revendication 1, **caractérisé en ce qu'**au moins un piquet vertical (14, 16) associé à un panneau extérieur comporte un moyen de fixation en translation (25) destiné à être relié à la structure de l'aéronef, de manière à reprendre les efforts axiaux auxquels le panneau extérieur est soumis.

3. Mur de cloisonnement vertical selon l'une des revendications 1 à 2, **caractérisé en ce qu'**au moins un panneau intermédiaire (12, 12'), disposé entre un panneau extérieur (13, 13') et un panneau central (11), est monté flottant sur au moins un piquet vertical (15, 16) associé, de manière à avoir un débattement parallèlement et perpendiculairement aux panneaux adjacents.

4. Mur de cloisonnement vertical selon la revendication 3, **caractérisé en ce que** l'extrémité haute (21) et l'extrémité basse (23) d'au moins un piquet vertical (15) associé à un panneau intermédiaire (12, 12') sont munies de moyens de fixation en rotation axiale (22, 24), destinés à être fixés respectivement à la structure de l'aéronef et au carénage ventral.

5. Mur de cloisonnement selon l'une des revendications 1 à 4, **caractérisé en ce qu'**il comporte un panneau central (11) monté fixe sur deux piquets verticaux (16) associés qui l'encadrent.

6. Aéronef (1) muni d'un carénage ventral (4) comportant au moins un mur de cloisonnement (10) selon l'une des revendications 1 à 5, situé au dessous du caisson de voilure de l'aéronef, à la jonction entre la voilure (3) et le fuselage (2) de l'aéronef, dans lequel les panneaux verticaux (11, 12, 12', 13, 13') du mur de cloisonnement sont montés fixes sur la semelle (5) du carénage ventral.

7. Aéronef selon la revendication 6, **caractérisé en ce que** l'extrémité haute (20) d'au moins un piquet vertical (14, 16) associé à un panneau extérieur (13, 13') du mur de cloisonnement est montée en rotation transversale (17, 19) sur le caisson de voilure de l'aéronef, de manière à autoriser l'allongement (Dy) dudit caisson de voilure parallèlement à l'axe transverse (Y) de l'aéronef.

8. Aéronef selon l'une des revendications 6 à 7, **caractérisé en ce qu'**au moins un piquet vertical (14, 16) associé à un panneau extérieur (13, 13') du mur de cloisonnement vertical est relié en translation (25) au caisson de voilure, de manière à reprendre les efforts axiaux auxquels ledit panneau extérieur est soumis.

9. Aéronef selon l'une des revendications 6 à 8, **caractérisé en ce que** l'extrémité haute (21) et l'extrémité basse (23) d'au moins un piquet vertical (15) associé à un panneau intermédiaire (12, 12') du mur de cloisonnement vertical sont montées en rotation axiale (22, 24), respectivement sur le caisson de voilure et sur la semelle (5) du carénage ventral, de manière à reprendre les efforts axiaux auxquels ledit panneau intermédiaire est soumis.

10. Aéronef selon l'une des revendications 6 à 9, **caractérisé en ce que** le mur de cloisonnement est relié au caisson de voilure par des poutres (8) longitudinales s'étendant parallèlement à l'axe longitudinal (X) de l'aéronef.

## Claims

1. A vertical partition wall (10) for the ventral fairing (4) of an aircraft (1) comprising a plurality of vertical panels (11, 12, 12', 13, 13') extending along the extensions of each other, each panel being connected to an adjacent panel by a vertical stake (14, 15, 16), **characterised in that** at least one outer panel (13, 13') of the partition wall, located at one end of said partition wall, is mounted attached to at least one associated vertical stake (14, 16), the upper end (20) of said associated vertical stake being equipped with a means for attachment by transverse rotation (17, 18, 19) aimed at being attached to the structure (8) of an aircraft, the means for attachment by transverse rotation being able to allow the structure of the aircraft to move (Dy) with respect to the partition wall, along the extension of said partition wall.

2. A vertical partition wall according to claim 1, **characterised in that** at least one vertical stake (14, 16) associated to an outer panel comprises a means for attachment by translation (25) aimed at being connected to the structure of the aircraft in such a way as to bear the axial stresses to which the outer panel is subject.

3. A vertical partition wall according to one of claims 1 to 2, **characterised in that** at least one intermediate panel (12, 12'), positioned between an outer panel (13, 13') and a central panel (11), is mounted in a floating manner on at least one associated vertical stake (15, 16) in such a way as to travel parallel and perpendicular to the adjacent panels.

4. A vertical partition wall according to claim 3, **characterised in that** the upper end (21) and the lower end (23) of at least one vertical stake (15) associated to an intermediate panel (12, 12') are equipped with means for attachment by axial rotation (22, 24), aimed at being attached to the structure of the aircraft and the ventral fairing respectively.

5. A partition wall according to one of claims 1 to 4, **characterised in that** it comprises a central panel (11) mounted attached to two surrounding associated vertical stakes (16).

6. An aircraft (1) equipped with a ventral fairing (4) comprising at least one partition wall (10) according to one of claims 1 to 5, located below the aircraft wing box at the junction between the wing (3) and the fuselage (2) of the aircraft, in which the vertical panels (11, 12, 12', 13, 13') of the partition wall are mounted attached to the flange (5) of the ventral fairing.

7. An aircraft according to claim 6, **characterised in that** the upper end (20) of at least one vertical stake (14, 16) associated to an outer panel (13, 13') of the partition wall is mounted by transverse rotation (17, 19) onto the aircraft wing box, in such a way as to allow said wing box to extend (Dy) parallel to the transverse axis (Y) of the aircraft.

8. An aircraft according to one of claims 6 to 7, **characterised in that** at least one vertical stake (14, 16) associated to an outer panel (13, 13') of the vertical partition wall is connected by translation (25) to the wing box, in such a way as to bear the axial stresses to which said outer panel is subject.

9. An aircraft according to one of claims 6 to 8, **characterised in that** the upper end (21) and the lower end (23) of at least one vertical stake (15) associated to an intermediate panel (12, 12') of the vertical partition wall are mounted by axial rotation (22, 24), onto the wing box and onto the flange (5) of the ventral fairing respectively, in such a way as to bear the axial stresses to which said intermediate panel is subject.

10. An aircraft according to one of claims 6 to 9, **characterised in that** the partition wall is connected to the wing box by longitudinal beams (8) extending parallel to the longitudinal axis (X) of the aircraft.

## Patentansprüche

1. Senkrechte Trennwand (10) für die Unterverkleidung (4) eines Flugzeugs (1) mit einer Vielzahl an senkrechten Paneelen (11, 12, 12', 13, 13'), die nacheinander angeordnet sind, wobei jede Paneele durch einen senkrechten Pfahl (14, 15, 16) mit der jeweils benachbarten Paneele verbunden ist, **dadurch gekennzeichnet, dass** zumindest eine äußere Paneele (13, 13') der Trennwand, die sich an einem Ende der besagten Trennwand befindet, fest an zumindest einem senkrechten Pfahl (14, 16) befestigt ist, wobei das obere Ende (20) des besagten zugeordneten senkrechten Pfahls mit einer seitlich drehbaren Befestigungsvorrichtung (17, 18, 19) ausgestattet ist, die dazu bestimmt ist, an der Struktur (8) eines Flugzeugs befestigt zu werden, und die seitlich drehbare Befestigungsvorrichtung in der Lage ist, die Bewegung (Dy) der Struktur des Flugzeugs im Verhältnis zur Trennwand in der Verlängerung der besagten Trennwand zu ermöglichen.

2. Flugzeug-Unterverkleidungs-Trennwand nach Anspruch 1, **dadurch gekennzeichnet, dass** zumindest ein einer äußeren Paneele zugeordneter senkrechter Pfahl (14, 16) eine verschiebbare Befestigungsvorrichtung (25) enthält, die dazu bestimmt ist, mit der Struktur des Flugzeugs verbunden zu werden, sodass die Axialkräfte aufgefangen werden, denen die äußere Paneele ausgesetzt ist.

3. Flugzeug-Unterverkleidungs-Trennwand nach einem der Ansprüche 1 bis 2, **dadurch gekennzeichnet, dass** zumindest eine Zwischenpaneele (12, 12'), die zwischen einer äußeren Paneele (13, 13') und einer mittleren Paneele (11) angeordnet ist, schwimmend auf zumindest einem zugeordneten senkrechten Pfahl (15, 16) befestigt ist, sodass ein Verfahrweg parallel und normal zu den benachbarten Paneelen besteht.

4. Flugzeug-Unterverkleidungs-Trennwand nach Anspruch 3, **dadurch gekennzeichnet, dass** das obere Ende (21) und das untere Ende (23) zumindest eines einer Zwischenpaneele (12, 12') zugeordneten senkrechten Pfahls (15) mit Befestigungsvorrichtungen mit Drehachse (22, 24) ausgestattet sind, die dazu bestimmt sind, jeweils an der Flugzeugstruktur und der Unterverkleidung befestigt zu werden.

5. Flugzeug-Unterverkleidungs-Trennwand nach einem der Ansprüche 1 bis 4, **dadurch gekennzeichnet, dass** sie eine Mittelpaneele (11) enthält, die fest auf zwei zugeordnete senkrechte Pfähle (16) montiert ist, die sie umgeben.

6. Flugzeug (1) mit einer Unterverkleidung (4) mit zumindest einer Trennwand (10) nach einem der Ansprüche 1 bis 5, die sich unterhalb des Flügelmittelkastens des Flugzeugs, an der Verbindung zwischen den Flügeln (3) und dem Rumpf (2) des Flugzeugs befindet, in der die senkrechten Paneele (11, 12, 12', 13, 13') der Trennwand fest auf der Sohle (5) der Unterverkleidung montiert sind.

7. Flugzeug nach Anspruch 6, **dadurch gekennzeichnet, dass** das obere Ende (20) zumindest eines einer äußeren Paneele (13, 13') zugeordneten senkrechten Pfahls (14, 16) der Trennwand so seitlich drehbar (17, 19) auf dem Flügelmittelkasten des Flugzeugs montiert ist, dass die Streckung (Dy) des besagten Flügelmittelkastens parallel zur Querachse (Y) des Flugzeugs ermöglicht wird.

8. Flugzeug nach einem der Ansprüche 6 bis 7, **dadurch gekennzeichnet, dass** zumindest ein einer äußeren Paneele (13, 13') zugeordneter senkrechter Pfahl (14, 16) der senkrechten Trennwand so verschiebbar (25) mit dem Flügelmittelkasten verbunden ist, dass die Axialkräfte, denen die besagte äußere Paneele ausgesetzt ist, aufgenommen werden.

9. Flugzeug nach einem der Ansprüche 6 bis 8, **dadurch gekennzeichnet, dass** das obere Ende (21) und das untere Ende (23) zumindest eines einer Zwischenpaneele (12, 12') zugeordneten senkrechten Pfahls (15) der senkrechten Trennwand axial drehend (22, 24) so auf dem Flügelmittelkasten und auf der Sohle (5) der Unterverkleidung montiert sind, dass die Axialkräfte, denen die besagte Zwischenpaneele ausgesetzt ist, aufgenommen werden.

10. Flugzeug nach einem der Ansprüche 6 bis 9, **dadurch gekennzeichnet, dass** die Trennwand durch Längsträger (8) mit dem Flügelmittelkasten verbunden ist, die sich parallel zur Längsachse (X) des Flugzeuges erstrecken.
